# EUROPÄISCHE PATENTSCHRIFT

(11) **EP 0 505 797 B1**
(45) Veröffentlichungstag und Bekanntmachung des Hinweises auf die Patenterteilung: **23.11.1994**
(21) Anmeldenummer: 92103928.5
(22) Anmeldetag: 07.03.1992
(51) Int. Cl.: A23L 1/31, A23C 19/09

(54) **Verfahren zum Herstellen einer schnittfesten Fleisch/Käse-Mischung**
Process for producing a sliceable mixture of meat and cheese
Procédé de préparation d'un mélange de viande et de fromage découpable en tranches

(30) Priorität: 29.03.1991 DE 4110413; 13.09.1991 DE 4130448
(43) Veröffentlichungstag der Anmeldung: 30.09.1992
(73) Patentinhaber: GELDERLANDER FLEISCHWARENGESELLSCHAFT m.b.H., D-46424 Emmerich (DE)
(72) Erfinder: von Wanroy, Henricus Johannes Maria, NL-6525 XX Nijmegen (NL); Maruschke, Thomas, Dipl.-Ing., W-4190 Kleve (DE); Pooth, Norbert, Dipl.-Ing., W-4281 Raesfeld-Erle (DE)
(74) Vertreter: Honke, Manfred, Dr.-Ing.

(56) Entgegenhaltungen:
- DE-C- 529 509
- GB-A- 1 275 118
- US-A- 2 937 092
- PATENT ABSTRACTS OF JAPAN vol. 4, no. 182 (C-35)(664) 16. Dezember 1980
- PATENT ABSTRACTS OF JAPAN vol. 13, no. 569 (C-666)(3917) 15. Dezember 1989
- PATENT ABSTRACTS OF JAPAN vol. 12, no. 482 (C-553)(3329) 15. Dezember 1988
- Patent Abstracts of Japan, vol. 13, no. 331 (C-622)(3329) 25. Juli 1989

## Beschreibung

Die Erfindung betrifft ein Verfahren zum Herstellen einer schnittfesten Fleisch/Käse-Mischung.

Bekannt sind solche Lebensmittel-Produkte wie Fleisch und Käse. Bekannt sind ferner Salate, bei denen Fleisch und Käsestreifen verarbeitet werden, aber als selbständige Bestandteile erhalten bleiben.

Außerdem kennt man ein Käse enthaltendes Hamburgersteak, wobei Käsestücke in das vorgekochte Hamburgersteak eingebettet werden, zusammen mit einer Soße in einer thermostabilen Kunststoffverpackung versiegelt werden und danach in einem Dampfbad bei ca. 100° C erhitzt und sterilisiert werden. Hierbei handelt es sich also lediglich um ein Hamburgersteak, welches Käse enthält und zusammen mit einer passenden Soße erhitzt wird (vgl. Patent Abstracts of Japan JP-A-55 120 773).

Weiter ist ein Verfahren bekannt, wonach die inneren Organe von Haustieren (in Verbindung mit Gewürzen) zu einer Pastete verarbeitet werden und danach mit geschmolzenem Käse in einem Gefäß verbunden werden. Damit wird zwar wiederum die Herstellung eines Fleisch/Käse-Produktes beschrieben, jedoch kein Kaltvermischen der Ausgangssubstanzen (vgl. Patent Abstracts of Japan JP-A-1 235 559).

Bei einem anderen Fleisch/Käse-Produkt wird gekochtes oder angekochtes Fleisch in einer mit Staniol ausgelegten Form in eine Emulsion eines eßbaren Käses eingelegt. Der heiße Käse umhüllt das Fleisch völlig, während das Staniol in an sich bekannter Weise über der noch heißen Käsehülle zusammengefaltet wird (vgl. DE-C-529 509).

Endlich ist ein Verfahren zur Herstellung eines Fleisch/Käse-Produktes bekannt, bei dem mageres und fettes Fleisch gemischt werden und zusammen mit Wasser, Gewürzen und Gelatine eine Mischung bilden, die anschließend gekocht wird. Nach dem Abkühlen dieser Mischung wird Käse in fadigem Zustand, also an der Schmelzgrenze, hinzugefügt und dann das Gesamte abgekühlt. Allerdings zerfällt das bekannte Fleisch/Käse-Produkt oberhalb einer Temperatur von 110° F, entsprechend ca. 43° C (vgl. GB-A-1 275 118).

Der Erfindung liegt die Aufgabe zugrunde, ein Verfahren anzugeben, wonach sich ein neuartiges Lebensmittelprodukt auf Basis von Fleisch und Käse herstellen läßt, welches als einheitliches Endprodukt besonders schmackhaft ist, sich durch ein appetitanregendes Erscheinungsbild auszeichnet und den lebensmittelrechtlichen Bestimmungen genügt.

Zur Lösung dieser Aufgabe ist Gegenstand der Erfindung ein Verfahren zum Herstellen einer Fleisch/Käse-Mischung, wonach Fleischstücke aus gepökeltem und geräuchertem Fleisch mit Käsestücken gemischt werden, die Mischung in einen thermostabilen Kunststoffbeutel verpackt, der gefüllte Beutel evakuiert und geschlossen wird, danach der geschlossene Beutel in einer Kochform bis zum Erreichen einer Kerntemperatur von 50° C bis 70° C, vorzugsweise 63° C gekocht, anschließend bis zum Erreichen einer Kerntemperatur von 5° C bis 12° C, vorzugsweise 7° C, abgekühlt wird. Sofern die nach dem erfindungsgemäßen Verfahren hergestellte Fleisch/Käse-Mischung zum alsbaldigen Gebrauch bestimmt ist, wird der thermostabile Beutel, regelmäßig ein Kunststoffbeutel von der erhaltenen Fleisch/Käse-Mischung entfernt, die Fleisch/Käse-Mischung in fettfreiem Papier verpackt, etikettiert und bei einer Temperatur von 3° C bis 8° C, vorzugsweise 6° C, gelagert. Ist jedoch die nach dem erfindungsgemäßen Verfahren hergestellte Fleisch/Käse-Mischung nicht für den alsbaldigen Gebrauch bestimmt, wird der thermostabile Kunststoffbeutel nicht von der erhaltenen Fleisch/Käse-Mischung entfernt, sondern diese bei eben 7° C gelagert.

Im Rahmen der Erfindung finden sämtliche Fleischarten Verwendung, die für den menschlichen Verzehr geeignet sind, insbesondere Fleisch vom Rind, Kalb, Schwein, Lamm sowie Geflügel und Wild. Bei der Verarbeitung von Schweinefleisch entsteht ein Schinkenkäse.

Überraschenderweise zeichnet sich die nach dem erfindungsgemäßen Verfahren hergestellte Fleisch/Käse-Mischung durch einen innigen Verbund zwischen den Fleisch- und Käsebestandteilen sowie durch gute Haltbarkeit aus. Ferner fallen bei der erfindungsgemäßen Fleisch/Käse-Mischung deren gediegene Geschmacksrichtung und appetitanregendes Aussehen auf, so daß eine köstliche Neuschöpfung auf dem Lebensmittelsektor zur Verfügung steht.

Vorteilhafte Weiterbildungen sind im folgenden aufgeführt. Vorzugsweise wird mageres Fleisch vom Kotelett, Schinken oder Schulter bzw. Brust, Rücken, Flügel oder Keule usw. ohne Schwarte, Knochen, Knorpel und Sehnen mit einem sichtbaren Fettanteil von ca 5 % verwendet. Die Analysewerte des verwendeten Fleisches sehen nach einem Ausführungsbeispiel wie folgt aus:

| | |
|---|---|
| Wasser | 69,5 % |
| Fett | 10 % |
| Fleischeiweiß | 19 % |
| Asche | 1,5 % |
| Bindegewebeeiweiß im Fleischeiweiß | 8 % |
| BEFFE (**B**indegewebe**e**iweiß**f**reies **F**leisch**e**iweiß) | 17,5 % |
| BE (**B**indegewebe**e**iweiß) | 1,5 %. |

Das Fleisch wird nach einem Trockensalzverfahren unter Zugabe von

| | |
|---|---|
| Nitritpökelsalz | 2,1 % pro kg Fleisch |
| Ascorbinsäure | 0,1 % pro kg Fleisch |
| Wasser | 2,3 % pro kg Fleisch |
| Zuckerstoffe und Gewürze | |

gepökelt. Im Zuge des Trockensalzverfahrens wird das Fleisch außerdem mittels eines Vakuum-Tumblers über 50 bis 70 Stunden, vorzugsweise 60 Stunden, mariniert. - Weiter ist es vorteilhaft, daß das gepökelte und marinierte Fleisch bei alternierenden Temperaturen von 60° C bis 80° C getrocknet, anschließend in einem Dampfrauchverfahren geräuchert und dann bis zum Erreichen einer Kerntemperatur von 70° C bis 80° C vorzugsweise 76° C, gegart wird, wobei der Gesamtprozeß etwa 8 Stunden und das Wasser/Eiweiß-Verhältnis nach dem Rauchprozeß ca. 2,5 beträgt. Im Falle einer längeren Lagerung des gepökelten und geräucherten Fleisches vor seiner Weiterverarbeitung mit Käse wird man das Fleisch auf einer Kerntemperatur von -20° C gefrieren. Bei sofortiger Weiterverarbeitung ist das jedoch nicht erforderlich. Weiter ist es vorteilhaft, daß als Käse ein Naturkäse mit folgenden Analysewerten verwendet wird:

| | |
|---|---|
| Wasser | 40 % bis 46 % |
| Eiweiß | ca. 25 % |
| Fett | 22 % bis 25 % |
| Salz | 2,2 % |
| pH-Wert | 5,4 bis 5,5. |

Im übrigen können nach einem Ausführungsbeispiel auch noch die folgenden Analysewerte verwirklicht sein, nämlich:

| | |
|---|---|
| Ca | 700 mg/100 g |
| P | 450 mg/100 g |
| Cholesterin | 80 mg/100 g |
| Fe | 0,6 mg/100 g. |

Zweckmäßigerweise werden das vorbehandelte Fleisch und der Käse in Stücke gleicher oder nahezu gleicher Größe geteilt und im Verhältnis 1:1 gemischt. Vorzugsweise werden als Fleischstücke und Käsestücke Würfel mit einer Kantenlänge von ca. 10 mm verwendet. Endlich ist vorgesehen, daß der mit Fleischstücken und Käsestücken in vorgegebener Mischung gefüllte, evakuierte und geschlossene Beutel im Wege einer Dampfgarung bei einer Temperatur von ca. 80° C und relativen Feuchte von 99 % mehrere Stunden, z. B. fünf Stunden, in einer Kochform und daraus resultierender Formgebung gekocht wird. Dann erfolgt ein mehrstündiges, z. B. zehnstündiges Kühlen auf eben eine Kerntemperatur von beispielsweise 7° C, um schließlich den aus einer Kunststoffolie bestehenden Beutel zu entfernen.

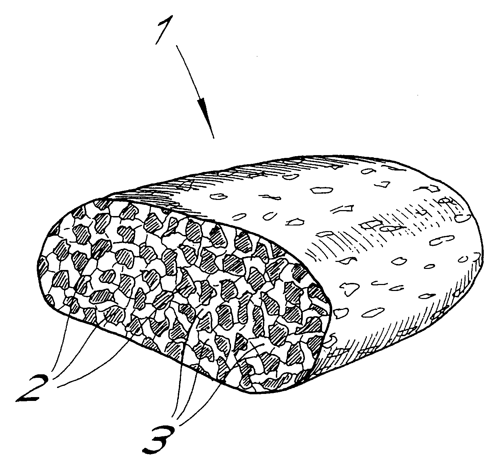

In der einzigen Figur ist eine schnittfeste Fleisch/Käse-Mischung 1 aus einem innigen Verbund von in vorgegebener Mischung unter Formgebung im Vakuum gegarten Fleischstücken 2 aus gepökeltem, geräuchertem Fleisch und Käsestücken 3 aus Naturkäse, dargestellt. Bei dem Käse kann es sich z. B. um Edamer handeln. Sofern es sich um Schweinefleisch handelt, entsteht ein Schinkenkäse.

## Patentansprüche

1. Verfahren zum Herstellen einer schnittfesten Fleisch/Käse-Mischung, wonach Fleischstücke aus gepökeltem und geräuchertem Fleisch mit Käsestücken gemischt werden, die Mischung in einen thermostabilen Beutel verpackt, der Beutel evakuiert und geschlossen wird, danach der Beutel in einer Kochform bis zum Erreichen einer Kerntemperatur von 50° C bis 70° C, vorzugsweise 63° C gekocht, anschließend und bis zum Erreichen einer Kerntemperatur von 5° C bis 12° C, vorzugsweise 7° C, abgekühlt wird.

2. Verfahren nach Anspruch 1, dadurch gekennzeichnet, daß mageres Fleisch vom Kotelett, Schinken oder Schulter bzw. Rücken, Brust, Flügel, Keule oder dergleichen, ohne Schwarte Knochen, Knorpel und Sehnen mit einem sichtbaren Fettanteil von ca. 5 % verwendet wird.

3. Verfahren nach Anspruch 1 oder 2, dadurch gekennzeichnet, daß das Fleisch nach einem Trockensalzverfahren unter Zugabe von Nitritpökelsalz, Ascorbinsäure, Wasser, Zuckerstoffen und Gewürzen gepökelt wird.

4. Verfahren nach einem der Ansprüche 1 bis 3, dadurch gekennzeichnet, daß das Fleisch mittels eines Vakuum-Tumblers über 50 bis 70 Stunden, vorzugsweise 60 Stunden, mariniert wird.

5. Verfahren nach einem der Ansprüche 1 bis 4, dadurch gekennzeichnet, daß das gepökelte und marinierte Fleisch bei alternierenden Temperaturen von 60° C bis 80° C getrocknet, anschließend in einem Dampfrauchverfahren geräuchert und dann bis zum Erreichen einer Kerntemperatur von 70° C bis 80° C, vorzugsweise 76° C, gegart wird.

6. Verfahren nach einem der Ansprüche 1 bis 5, dadurch gekennzeichnet, daß ein Naturkäse mit folgenden Analysedaten:
| | |
|---|---|
| Wasser | 40 % bis 46 % |
| Eiweiß | ca. 25 % |
| Fett | 22 % bis 25 % |
| Salz | 2,2 % |
| pH-Wert | 5,4 bis 5,5 |
verwendet wird.

7. Verfahren nach einem der Ansprüche 1 bis 6, dadurch gekennzeichnet, daß das Fleisch und der Käse gleicher oder nahezu gleicher Größe geteilt und im Verhältnis 1 : 1 gemischt werden.

8. Verfahren nach einem der Ansprüche 1 bis 7, dadurch gekennzeichnet, daß als Fleischstücke und Käsestücke Würfel mit einer Kantenlänge von ca. 10 mm verwendet werden.

9. Verfahren nach einem der Ansprüche 1 bis 8, dadurch gekennzeichnet, daß der mit vorbehandelten Fleischstücken und Käsestücken in vorgegebener Mischung gefüllte, evakuierte und geschlossene Beutel im Wege einer Dampfgarung bei einer Temperatur von ca. 80° C und relativen Feuchte von 99 % mehrere Stunden, z. B. fünf Stunden, in der Kochform gekocht wird.

## Claims

1. A process for producing a sliceable mixture of meat and cheese, wherein pieces of meat comprising pickled, smoked meat are mixed with pieces of cheese, the mixture is packed in a thermally stable bag, the bag is evacuated and sealed, thereafter the bag is cooked in a cooking mould until a core temperature of 50°C to 70°C, preferably 63°C, is reached, and is subsequently cooled until a core temperature of 5°C to 12°C, preferably 7°C, is reached.

2. A process according to claim 1, characterised in that lean meat from a cutlet, a ham or a shoulder, or from the back, breast, wing, leg or the like is used, without skin, bone, gristle and sinew and with a visible fat content of about 5%.

3. A process according to claim 1 or 2, characterised in that the meat is pickled by a dry pickling method with the addition of nitrite pickling salt, ascorbic acid, water, saccharine matter and spices.

4. A process according to any one of claims 1 to 3, characterised in that the meat is marinaded by means of a vacuum tumbler for 50 to 70 hours, preferably 60 hours.

5. A process according to any one of claims 1 to 4, characterised in that the pickled, marinaded meat is dried at alternating temperatures of 60°C to 80°C, subsequently smoked in a vapour smoking process and is then cooked until a core temperature of 70°C to 80°C, preferably 76°C, is reached.

6. A process according to any one of claims 1 to 5, characterised in that a natural cheese is used which has the following analysis:
| | |
|---|---|
| water | 40% to 46% |
| protein | about 25% |
| fat | 22% to 25% |
| salt | 2.2% |
| pH | 5.4 to 5.5. |

7. A process according to any one of claims 1 to 6, characterised in that the meat and the cheese are divided into pieces of the same or almost the same size and are mixed in a 1:1 ratio.

8. A process according to any one of claims 1 to 7, characterised in that cubes with an edge length of about 10 mm are used as the pieces of meat and pieces of cheese.

9. A process according to any one of claims 1 to 8, characterised in that the evacuated, sealed bag, which is filled with pretreated pieces of meat and pieces of cheese in a predetermined mixture, is cooked in the cooking mould by a steam cooking method at a temperature of about 80°C and a relative humidity of 99% for several hours, e.g. five hours.

## Revendications

1. Procédé de fabrication d'un mélange viande/fromage à trancher, les morceaux de viande salée et fumée étant mélangés à des morceaux de fromage, le mélange étant emballé dans un sachet thermiquement stable, le sachet est mis sous vide et fermé puis est cuit dans un moule de cuisson jusqu'à l'obtention d'une température à coeur de 50 °C à 70 °C, de préférence 63 °C, puis est refroidi jusqu'à l'obtention d'une température à coeur de 5 °C à 12 °C, de préférence 7 °C.

2. Procédé selon la revendication 1, caractérisé en ce qu'on utilise de la viande maigre de côtelette, de jambon ou d'épaule ou d'échine, de poitrine, d'ailes, de cuisses ou similaires sans couenne ni os, ni cartilages, ni tendons avec une proportion de gras visible d'environ 5 %.

3. Procédé selon les revendications 1 ou 2, caractérisé en ce que la viande est salée selon un procédé de salage à sec par addition de sel de nitrite, d'acide ascorbique, d'eau de substances à base de sucre et d'épices.

4. Procédé selon l'une des revendications 1 à 3, caractérisé en ce que la viande est marinée au moyen d'un tumbler sous vide pendant 50 à 70 heures, de préférence 60 heures.

5. Procédé selon l'une des revendications 1 à 4, caractérisé en ce que la viande salée et marinée est séchée à des températures alternées de 60 °C à 80 °C, puis fumée dans un procédé de fumage à la vapeur et ensuite affinée jusqu'à obtention d'une température à coeur de 70 °C à 80 °C, de préférence 76 °C.

6. Procédé selon l'une des revendications 1 à 5, caractérisé en ce qu'on utilise un fromage naturel de composition suivante :
| | |
|---|---|
| Eau | 40 % à 46 % |
| Protéines | env. 25 % |
| mat. grasses | 22 % à 25 % |
| sel | 2,2 % |
| pH | 5,4 à 5,5. |

7. Procédé selon l'une des revendications 1 à 6, caractérisé en ce que la viande et le fromage sont coupés en morceaux de même grosseur ou presque et sont mélangés dans un rapport de 1 à 1.

8. Procédé selon l'une des revendications 1 à 7, caractérisé en ce qu'on utilise comme morceaux de viande et de fromage des cubes d'une longueur de côté d'environ 10 mm.

9. Procédé selon l'une des revendications 1 à 8, caractérisé en ce que le sachet rempli des morceaux de viande prétraitée et des morceaux de fromage dans le mélange donné, mis sous vide puis fermé est cuit dans le moule de cuisson au cours d'un affinage à la vapeur, à une température d'environ 80 °C et une humidité relative de 99 %, pendant plusieurs heures, par exemple cinq heures.
